(19) **Europäisches Patentamt**

**European Patent Office**

**Office européen des brevets**

(11) Veröffentlichungsnummer: **0 343 339**
**A2**

(12) **EUROPÄISCHE PATENTANMELDUNG**

(21) Anmeldenummer: 89105029.6

(51) Int. Cl.⁴: **F16F 9/02 , A47C 3/30**

(22) Anmeldetag: 21.03.89

(30) Priorität: 27.05.88 DE 3818065

(43) Veröffentlichungstag der Anmeldung:
29.11.89 Patentblatt 89/48

(84) Benannte Vertragsstaaten:
AT BE CH DE ES FR GB GR IT LI LU NL SE

(71) Anmelder: **Bansbach, Hermann**
**Cranachstrasse 6**
**D-7073 Lorch/Württemberg(DE)**

(72) Erfinder: **Bansbach, Hermann**
**Cranachstrasse 6**
**D-7073 Lorch/Württemberg(DE)**

(74) Vertreter: **Patentanwälte Phys. Bartels**
**Dipl.-Ing. Fink Dr.-Ing. Held**
**Lange Strasse 51**
**D-7000 Stuttgart 1(DE)**

(54) **Feststellvorrichtung.**

(57) Eine Vorrichtung zum Feststellen zweier gegenseitig bewegbarer Körper in einer gewünschten Lage hat einen mit einem Fluid gefüllten und mit einem der Körper verbundenen Zylindermantel (1), einen darin geführten und mit dem anderen Körper verbundenen Kolben (4), der einen Durchgang zwischen zwei von dem Kolben getrennten Zylinderräumen (3a, 3b) im Zylindermantel und an einem seiner Enden einen radial nach innen ragenden Teil (17) hat, eine am Kolben (4) befestigte hohle Kolbenstange (5), eine in der Kolbenstange axial bewegbare Betätigungsstange (6), einen den Durchgang im Kolben überwachenden und mittels der Betätigungsstange (6) gegenüber dem Kolben (4) bewegbares Schließglied (21), wobei der Spalt zwischen dem Schließglied und dem das Schließglied umgebenden Körper (4; 18c) von zwei im axialen Abstand voneinander angeordneten Dichtringen (19, 20) abgedichtet ist. Um eine einfache Montage zwischen der Kolbenstange und dem Kolben zu ermöglichen, wobei der Kolben im wesentlichen nur von einer Seite aus bearbeitet zu werden braucht, ist der nach innen ragende Teil des Kolbens (4) der einzige nach innen ragende Teil dieses Kolbens und dieser ist derart ausgebildet, daß das Schließglied (21) zusammen mit den zugeordneten Dichtringen (19, 20) von einer Stirnseite aus zugänglich ist.

Fig.1

## Feststellvorrichtung

Die Erfindung bezieht sich auf eine Vorrichtung entsprechend dem Oberbegriff des Anspruches 1.

Bei einer bekannten Vorrichtung der Vorgenannten Art hat der Kolben in seinem mittleren Bereich einen nach innen ragenden Flansch, welcher die für die Befestigung des Kolbens an der Kolbenstange dienende Seite von der das Schließglied im wesentlichen aufnehmenden Seite trennt. An dem das Schließglied aufnehmenden Ende ist eine die Dichtringe und deren Distanzkörper haltende Ringscheibe in den Kolben eingebördelt. Eine solche Bauform des Kolbens ist Verhältnismäßig aufwendig, da er von zwei Seiten her bearbeitet werden muß und da mindestens ein zusätzlicher Arbeitsgang für die Einbördelung der Ringscheibe notwendig ist. Der Kolben und die Kolbenstange sind mittels eines in eine Ringnut in der Kolbenstange eingedrückten Teils des Kolbens miteinander verbunden (DE-OS 35 07 520).

Der Vorliegenden Erfindung liegt ausgehend von diesem Stand der Technik die Aufgabe zugrunde, eine einfache Montage zwischen der Kolbenstange und dem Kolben zu ermöglichen, wobei der Kolben im wesentlichen nur von einer Seite aus bearbeitet zu werden braucht. Diese Aufgabe wird durch die Merkmale im Kennzeichnungsteil des Hauptanspruches erfindungsgemäß gelöst. Die erfindungsgemäße Feststellvorrichtung hat einen einfach gebauten Kolben, der leicht herstellbar ist und der im wesentlichen nur von einer Seite bearbeitet zu werden braucht, da er sonst frei von nach innen ragenden Teilen ist und keinen Hinterschnitt aufweist. Die Kolbenstange ist an dem Kolben mittels eines Verbindungsgliedes oder durch eine von innen nach außen wirkendes Nieten hergestellte Nietverbindung mit der Kolbenstange verbindbar.

Die Merkmale des Anspruches 2 betreffen eine bevorzugte Weiterbildung der Erfindung.

Das im Kolben befindliche Schließglied ist in seiner Schließlage durch die Merkmale des Anspruches 3 bestimmt.

Die Merkmale des Anspruches 4 sind auf eine leicht montierbare und lösbare Verbindung zwischen dem Kolben und der Kolbenstange gerichtet.

Durch die Merkmale des Anspruches 5 wird ein zusätzlicher, nach innen ragender Teil am Kolben vermieden, der zu seiner Herstellung einen Hinterschnitt braucht.

Eine andere einfache Verbindung zwischen der Kolbenstange und dem Kolben ergibt sich aus den Merkmalen des Anspruches 6.

Die Merkmale des Anspruches 7 sind auf eine Nietverbindung zwischen der Kolbenstange und dem Kolben gerichtet, wobei der Nietvorgang von innen nach außen gerichtet ist.

Für den Fall, daß die Nietverbindung nach Anspruch 6 nicht dicht sein oder bleiben sollte, ist eine einfache Dichtung nach Anspruch 8 vorgesehen.

Weitere Vorteile ergeben sich aus der Beschreibung und der Zeichnung.

In dieser ist eine Feststellvorrichtung als Ausführungsbeispiel des Gegenstandes der Erfindung schematisch dargestellt. Es zeigen:

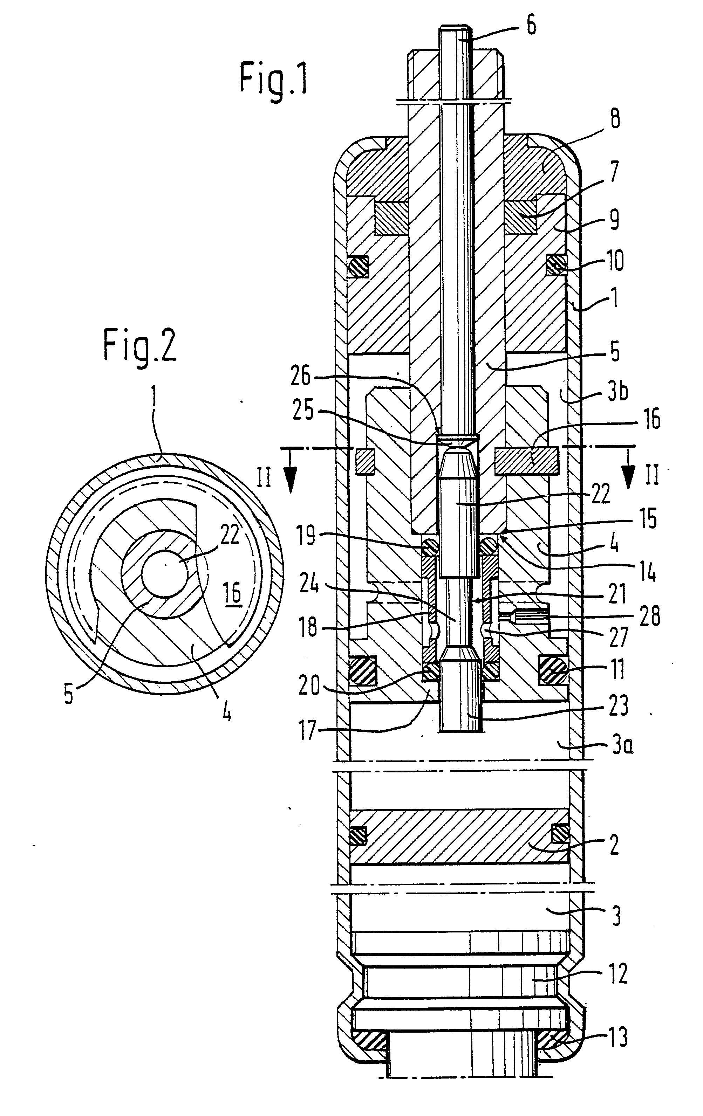

Fig. 1 ein erstes Ausführungsbeispiel im Längsschnitt,

Fig. 2 einen Schnitt nach Linie II-II in Fig. 1,

Fig. 3 einen Teillängsschnitt durch ein zweites Ausführungsbeispiel in anderem Maßstab.

In einem Zylindermantel 1 ist ein Trennkolben 2 axial verschiebbar gelagert, der einen ein komprimiertes Gas aufnehmenden Gasraum 3 von einem eine Flüssigkeit aufnehmenden Flüssigkeitsraum 3a trennt.

In dem Zylindermantel 1 ist auch ein Kolben 4 axial verschiebbar gelagert, mit dem eine hohle Kolbenstange 5 fest verbunden ist. Durch die Kolbenstange 5 ist eine Betätigungsstange 6 hindurchgeführt, die über das ein Gewinde tragende, aus dem Zylindermantel 1 herausragende freie Ende der Kolbenstange 5 übersteht. Die Kolbenstange 5 ist in zwei einen Dichtring 7 zwischen sich aufnehmenden Zylinderdeckeln 8 und 9 geführt, wovon der Zylinderdeckel 8 durch Einbördeln des Zylindermantels 1 gehalten ist. Zwischen dem Zylinderdeckel 9 und dem Zylindermatel 1 sowie zwischen dem Kolben 4 und dem Zylindermantel 1 sind jeweils Dichtringe 10 bzw. 11 vorgesehen.

An dem vom Zylinderdeckel 8 abgewandten Ende des Zylindermantels 1 ist ein Zylinderdeckel 12 formschlüssig befestigt, an dem eine nicht dargestellte Öse, ein Gewinde oder dgl. angebracht ist. Zwischen dem Zylinderdeckel 12 und dem nach innen gebogenen Ende des Zylindermantels 1 ist ein Dichtring 13 angeordnet.

Der Kolben 4 ist im Querschnitt T-förmig ausgebildet und trennt den Flüssigkeitsraum 3a von einem Flüssigkeitsraum 3b. Der Dichtring 11 befindet sich in einem nach außen ragenden Flansch des Kolbens 4. Die Kolbenstange 5 ist auf der vom Dichtring 11 abgewandten Seite in den Kolben 4 eingesetzt und ragt etwa bis zu dessen Mitte, wo sich eine Schulter 14 befindet, auf welcher die Kolbenstange 5 aufsteht. An der Außenseite der Schulter 14 befindet sich ein Dichtring 15 zwischen der Kolbenstange 5 und dem Kolben 4, der nicht über die Breite der Schulter 14 reicht.

Zur Verbindung des Kolbens 4 mit der Kolbenstange 5 dient ein im wesentlichen U-förmiges Verbindungsglied 16, das den Kolben 4 auf einem Großteil seines Umfanges umgibt und in eine Ausnehmung, insbesondere Ringnut, in der Kolbenstange 5 eingreift. Der Außendurchmesser des Verbindungsgliedes 16 ist nur wenig kleiner als der Innendurchmesser des Zylindermantels 1, so daß die Verbindungslage des Verbindungsgliedes 16 während des Betriebes gesichert ist.

Im Bereich des Dichtringes 11 hat der Kolben 4 einen nach innen stehenden Bund 17 als einzige nach innen ragenden Teil und ist derart ausgebildet, daß die in ihm befindlichen, nachstehend beschriebenen Teile nach dem Entfernen der Kolbenstange 5 von der Kolbenstangenseite aus zugänglich sind und nach dieser Seite hin aus dem Kolben 4 entfernbar sind. Der außer dem Bund 17 keinen nach innen ragenden Teil aufweisende Kolben 4 kann ohne Hinterschnitt hergestellt werden. Der zwischen der Schulter 14 und dem Bund 17 liegende Raum, dessen Durchmesser kleiner als der Durchmesser des zur Aufnahme der Kolbenstange dienenden Hohlraumes ist, nimmt ein hohlzylindrisches und an seinem Ende mit nach außen stehenden Flanschen versehenes Distanzstück 18 auf, an dessen Enden Dichtringe 19 und 20 angeordnet sind. Durch die beiden Dichtringe 19 und 20 ist ein Schließglied 21 hindurchgeführt, das an seinen beiden Enden je einen Kolbenteil 22 und 23 hat. Die beiden Kolbenteile 22, 23 sind durch ein im Durchmesser kleineres Verbindungsstück 24 miteinander verbunden. Der Kolbenteil 23 ragt nach unten vor und der Kolbenteil 22 ragt in die hohle Kolbenstange 5 hinein und steht unter dem Druck im Gasraum 3 und in den Flüssigkeitsräumen 3a, 3b an dem erweiterten Ende 25 der Betätigungsstange 6 an, das an einer Anschlagschulter 26 in der Betätigungsstange 6 ansteht.

In der in der Zeichnung dargestellten Lage des Schließgliedes 21 sind die Flüssigkeitsräume 3a und 3b durch den Kolben 4 voneinander getrennt. Wird mittels der Betätigungsstange 6 das Schließglied 21 in eine Lage gebracht, in welcher zwischen dem Verbindungsstück 24 und dem Bund 17 Flüssigkeit ins Innere des Distanzstückes 18 einströmen kann, besteht eine Verbindung über eine im Bereich einer äußeren Ringnut angeordneten Verbindungsbohrung 27 im Distanzstück 18 und Verbindungsbohrungen 28 im Kolben 4 mit dem Flüssigkeitsraum 3b. Der Kolben 4 kann nun gegenüber dem Zylindermantel 1 und damit kann auch die Kobelstange 5 axial bewegt werden. Der Druck im Gasraum 3 sucht den Kolben 4 nach außen zu schieben, weshalb dieser nur unter Überwindung der vom Gasraum 3 auf den Kolben 4 ausgeübten Kraft in Richtung zum Trennkolben 2 geschoben werden kann. Wird die Betätigungsstange 6 nicht mehr betätigt, so nimmt das Schließglied 21 unter dem Druck im Gasraum 3 und damit auch in dem Flüssigkeitsraum 3a die in der Zeichnung dargestellte Lage wieder ein. Der Verschiebeweg des Schließgliedes 21 ist geringer als die Länge des in Richtung zur Kolbenstange 5 überstehenden Abschnittes des Kolbenteiles 22.

Vorstehend wurde eine hydropneumatische Feststellvorrichtung beschrieben. Diese kann auch nach Art einer Gasfeder ohne Flüssigkeit ausgebildet sein. Wenn der Zylindermantel 1 nur mit Gas gefüllt ist, kann der Trennkolben 2 entfallen.

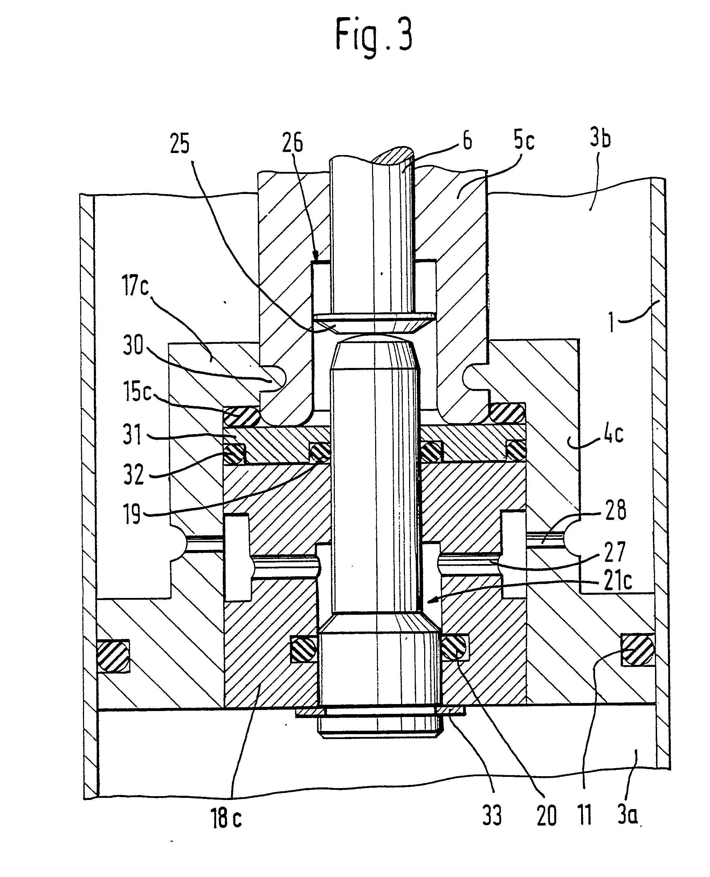

Die Fig. 3 zeigt eine Abwandlung des vorstehend beschriebenen Ausführungsbeispieles, wobei gleiche Teile mit gleichen Bezugszeichen versehen werden und abgewandelten Teilen der Buchstabe c beigefügt ist.

Der Kolben 4c hat an seiner der Kolbenstange 5c zugewandten Seite einen nach innen ragenden Bund 17c, der einen mittigen Wulst 30 aufweist, welcher von dem dem Kolben 4c benachbarten Ende der Kolbenstange 5c umgeben ist. Der Bund 17c und der Wulst 30 bilden einen einzigen nach innen ragenden Teil, da der Kolben 4c ohne Hinterschnitt herstellbar ist und da die im Kolben 4c befindlichen, dem von der Betätigungsstange 6 betätigbaren Ventil zugehörigen Teile von einer Seite aus zugänglich sind. Die Verbindung zwischen der Kolbenstange 5c und dem Kolben 4c ist eine Nietverbindung, die mit von innen nach außen wirkender Nietkraft hergestellt wurde. Das in der Zeichnung obere Ende des Wulstes 30 kann sich bis zum oberen Ende des Bundes 17 erstrecken. Der Kolben 4c ist auf seiten des Dichtringes 11 offen und weist einen Innenraum mit gleichbleibendem Innendurchmesser auf. In diesen Innenraum ist ein Distanzstück 18c mit Preßsitz eingesetzt, das in Höhe des Dichtringes 11 den Dichtring 20 aufnimmt. Zwischen dem Distanzstück 18c und dem Bund 17c ist eine Dichtplatte 31 angeordnet, die in einer zum Distanzstück 18c offenen Nut im Innenbereich den Dichtring 19 und im Außenbereich einen Dichtring 32 aufnimmt. Zwischen der Dichtplatte 31, dem Kolben 4c und der Kolbenstange 5c ist ein Dichtring 15c eingelegt.

Das Schließglied 21c hat im Bereich des Dichtringes 20 einen größeren Durchmesser als im Bereich des Dichtringes 19 und nimmt an seinem über den Kolben 4c herausragenden Ende in einer Nut einen Haltering 33 auf, der entfallen kann, wenn für die Schließlage des Schließgliedes die Schulter 26 in der Kolbenstange 5c und das erweiterte Ende 25 an der Betätigungsstange 6 als Anschlag benutzt werden. Auch ist möglich, ein Schließglied mit kegelförmigem Schließbereich zu verwenden. Das Distanzstück 18c und die Dichtplatte 31 können ein Stück bilden.

In der dargestellten Lage des Schließgliedes 21c sind die beiden Flüssigkeitsräume 3b und 3c voneinander getrennt. Wird mittels der Betätigungsstange 6 das Schließglied 21c soweit verschoben, daß sein im Durchmesser kleinerer Teil im Bereich des Dichtringes 20 liegt, besteht eine Verbindung zwischen den Flüssigkeitsräumen 3a und 3b über die Bohrungen 27 und 28, wobei die Bohrung 27 von einer Ringnut umgeben ist.

**Ansprüche**

1. Vorrichtung zum Feststellen zweier gegenseitig bewegbarer Körper in einer gewünschten Lage mit einem mit einem Fluid gefüllten und mit einem der Körper verbundenen Zylindermantel (1), mit einem darin geführten und mit dem anderen Körper verbundenen Kolben (4), der einen Durchgang zwischen zwei von dem Kolben getrennten Zylinderräumen (3a, 3b) im Zylindermantel und an einem seiner Enden einen radial nach innen ragenden Teil (17) hat, mit einer am Kolben (4) befestigten hohlen Kolbenstange (5), mit einer in der Kolbenstange axial bewegbaren Betätigungsstange (6), mit einem den Durchgang im Kolben überwachenden und mittels der Betätigungsstange (6) gegenüber dem Kolben (4) bewegbaren Schließglied (21), wobei der Spalt zwischen dem Schließglied und dem das Schließglied umgebenden Körper (4; 18c) von zwei im axialen Abstand voneinander angeordneten Dichtringen (19, 20) abgedichtet ist, dadurch **gekennzeichnet,** daß der nach innen ragende Teil des Kolbens (4) der einzige nach innen ragende Teil dieses Kolbens und dieser derart ausgebildet ist, daß das Schließglied (21) zusammen mit den zugeordneten Dichtringen (19, 20) von einer Stirnseite aus zugänglich sind.

2. Vorrichtung nach Anspruch 1, dadurch **gekennzeichnet,** daß der Kolben (4) nach Art einer mit einem Boden versehenen Hülse ausgebildet ist, durch deren Boden das Schließglied (21) und/oder die Kolbenstange (5) hindurchragt.

3. Vorrichtung nach Anspruch 1 oder 2, dadurch **gekennzeichnet,** daß das den Kolben (4) benachbarte Ende der Betätigungsstange (6) erweitert ist und zusammen mit einer Schulter (26) in der Betätigungsstange einen die Schließlage des Schließgliedes (21) bestimmenden Anschlag bildet.

4. Vorrichtung nach einem der vorhergehenden Ansprüche, dadurch **gekennzeichnet,** daß der Kolben (4) mittels eines seitlich einsetzbaren, im wesentlichen U-förmigen und in die Kolbenstange (5) und in den Kolben (4) eingreifenden Verbindungsgliedes (16) mit der Kolbenstange (5) verbunden ist, wobei der Außendurchmesser des Verbindungsgliedes dem Innendurchmesser des Zylindermantels (1) derart angepaßt ist, daß das Verbindungsglied (16) am Verlassen seiner Verbindunglage gehindert ist.

5. Vorrichtung nach einem der vorhergehenden Ansprüche, dadurch **gekennzeichnet,** daß der Kolben (4) auf seiner Innenseite an einer Stelle, die von dem nach innen ragenden Teil entfernt ist, mit größerem Durchmesser und eine Schulter (14) bildend gestuft ausgebildet ist, wobei die Stufe zur Anlage der Stirnseite der Kolbenstange (5) und zur Aufnahme eines zwischen der Kolbenstange (5) und der Schulter (14) befindlichen Dichtringes (15) dient.

6. Vorrichtung nach einem der Ansprüche 1 bis 3, dadurch **gekennzeichnet,** daß in dem nach innen ragenden Teil des Kolbens (4c) das Ende der Kolbenstange (5c) befestigt ist.

7. Vorrichtung nach Anspruch 6, dadurch **gekennzeichnet,** daß an dem nach innen ragenden Teil (17c) des Kolbens (4c) ein vom benachbarten Ende der Kolbenstange (5c) umgebener Wulst (30) vorgesehen ist.

8. Vorrichtung nach Anspruch 6 oder 7, dadurch **gekennzeichnet,** daß zwischen dem Kolben (4c), dem daran befestigten Teil der Kolbenstange (5c) und einem im Kolben befindlichen Körper (31), der je einen am Kolben (4c) bzw. am Dichtglied (21c) anstehenden Dichtring (32 bzw. 19) trägt, ein Dichtring (15c) vorgesehen ist.

Fig.1

Fig.2

# Fig.3